# FASCICULE DE BREVET EUROPEEN

(11) **EP 0 270 404 B1**
(45) Date de publication et mention de la délivrance du brevet: **28.09.1994**
(21) Numéro de dépôt: 87402430.0
(22) Date de dépôt: 28.10.1987
(51) Int. Cl.: G11B 5/31

(54) **Arrangement de pôles magnétiques, application à une tête magnétique d'enregistrement/lecture et procédé de réalisation**
Anordnung magnetischer Pole, Anwendung in einem Schreib/Lese-Magnetkopf und Herstellungsverfahren
Arrangement of magnetic poles, application in a magnetic read/write head and manufacturing method

(30) Priorité: 28.10.1986 FR 8614974
(43) Date de publication de la demande: 08.06.1988
(60) Demande divisionnaire: 94201146.1
(73) Titulaire: THOMSON-CSF, 75008 Paris (FR)
(72) Inventeur: Lehureau, Jean-Claude, F-75008 Paris (FR)
(74) Mandataire: Guérin, Michel

(56) Documents cités:
- DE-A- 2 819 208
- JP-A-61 151 818
- US-A- 3 214 645
- US-A- 3 601 871
- US-A- 4 399 479
- PATENT ABSTRACTS OF JAPAN, vol. 4, no. 118 (P-24)[600], 22 août 1980, page 71 P24; & JP-A-55 73 913
- PATENT ABSTRACTS OF JAPAN, vol. 6, no. 241 (P-158)[1119], 30 novembre 1982; &JP-A-57 141 009
- PATENT ABSTRACTS OF JAPAN, vol. 9, no. 323 (P-414)[2046], 18 décembre 1985; &JP-A-60 150 219
- PATENT ABSTRACTS OF JAPAN, vol. 7, no. 138 (P-204)[1283], 16 juin 1983; & JP-A-58 53 019
- PATENT ABSTRACTS OF JAPAN, vol. 5, no. 1 (P-43)[673], 8 janvier 1981; & JP-A-55132 519
- PATENT ABSTRACTS OF JAPAN, vol. 10, no. 45 (P-430)[2102], 21 février 1986; &JP-A-60 191 407
- PATENT ABSTRACTS OF JAPAN, vol. 6, no. 27 (P-102)]905], 17 février 1982; & JP-A-56 145 517

## Description

L'invention concerne un arrangement de pôles magnétiques pour tête d'enregistrement/lecture en couches minces, son application à une tête magnétique et son procédé de réalisation .

Dans la technologie connue de réalisation des têtes magnétiques en couches minces, l'entrefer de la tête magnétique est réalisé par superposition de couches magnétiques constituant le premier pôle magnétique, d'une couche non magnétique constituant l'entrefer proprement dit, enfin d'une autre succession de couches magnétiques constituant le deuxième pôle.

A titre d'exemple, une telle tête magnétique est décrite dans la demande de brevet français n° 86 05238 déposée le 11 avril 1986.

L'ensemble est gravé de manière à définir la hauteur de l'entrefer correspondant à la largeur de piste. après sciage, cet entrefer est poli de manière à ajuster la profondeur de l'entrefer.

Les nombreux types de têtes en couches minces différent par la nature des substrats, superstrat et couches employées ainsi que le mode de réalisation du bobinage. Toutefois, le mode de réalisation de l'entrefer est toujours identique à celui mentionné ci-dessus.

L'opération d'ajustage de la profondeur de l'entrefer est individuelle et très délicate. En effet, cette profondeur ne doit pas dépasser une dizaine de microns au risque de baisser l'efficacité de la tête de manière trop importante. L'opération de sciage elle-même offre une imprécision de plusieurs dizaines de microns.

La technologie connue des têtes magnétiques à couches minces se heurte donc principalement à une phase de polissage individuelle des têtes qui est très coûteuse et présente un taux de réussite faible.

On connaît des têtes magnétiques en couches minces telles que décrites dans les documents JP-A-55 132 519 et US-A-4 399 479 dont les pôles sont réalisés en couches minces sur un substrat et dans laquelle la surface active de la tête est parallèle au substrat. Cependant, la réalisation de l'entrefer d'une telle tête peut présenter des difficultés. Egalement, le document JP-A-61 151 818 décrit une tête magnétique en couches minces dans laquelle une pièce support, dans laquelle est insérée un conducteur, supporte sur la même face un premier et un deuxième pôles magnétiques en couches minces séparés par une couche d'entrefer en matériau amagnétique, cette couche en matériau amagnétique se prolongeant entre le deuxième pôles magnétique et la pièce support et son conducteur. Pour réaliser une telle structure, le document JP-A-61 151 818 explique qu'on réalise le premier pôle sur la pièce support et sur le conducteur. On usine un flanc de ce pôle, de façon à garantir la rectitude de l'entrefer, par usinage mécanique (à l'aide d'une fraise par exemple). Cet usinage prévoit d'entamer la face supérieure du conducteur au-dessus duquel sera réalisé l'entrefer. On réalise ainsi une saignée à l'emplacement de ce qui sera l'entrefer. Ensuite, on dépose une couche de matériau amagnétique sur l'ensemble (pour l'entrefer) puis une couche de matériau magnétique (pour le deuxième pôle). Enfin on usine la face supérieure de l'ensemble de façon à enlever la couche de matériau magnétique et la couche de matériau amagnétique situées au-dessus du premier pôle.

L'inconvénient d'une telle tête est que, à proximité de l'entrefer, la surface sur laquelle est réalisée la couche amagnétique et par suite la couche magnétique, possède une saignée. Cette saignée, à l'échelle des couches réalisés en couches minces constitue une irrégularité de surface importante. Cette irrégularité conduit localement à une modification des propriétés magnétiques de la couche magnétique du deuxième pôle voire à des failures dans cette couche. Ces défauts ont d'autant plus d'importance lorsqu'ils existent à proximité de l'entrefer de la tête magnétique. En effet une tête magnétique en couches minces possède un entrefer de quelques dixièmes de micromètres d'épaisseur. Dans ces conditions, une variation des propriétés magnétiques de la couche ou une failure située à proximité de l'entrefer se comportera comme un entrefer supplémentaire : il perturbera le fonctionnement de la tête et pourra éventuellement inscrire lui-même sur le support d'informations.

L'invention propose une solution qui permet de résoudre cette difficulté.

En outre, l'invention prévoit d'intégrer la phase de polissage dans les opérations antérieures au sciage du substrat, réduisant ainsi son coût dans un rapport voisin du niveau d'intégration des têtes sur le substrat qui peut atteindre le taux de 1000. Par ailleurs, selon l'invention, le type de tête réalisé est plus efficient que les têtes suivant l'art antérieur.

L'invention concerne donc un arrangement de pôles magnétiques pour une tête magnétique d'enregistrement/lecture en couches minces comprenant
- une pièce de substrat possédant une face principale parallèle à la face active de la tête magnétique,
- un premier pôle de circuit magnétique situé sur cette face principale et présentant un premier flanc formant un angle avec la face principale,
- un deuxième pôle de circuit magnétique situé sur la face principale et présentant également un deuxième flanc sensiblement parallèle au premier flanc,
- une couche d'un matériau amagnétique située entre le premier flanc et le deuxième flanc et se prolongeant entre le deuxième pôle et la face principale

caractérisé en ce que la couche amagnétique ne présente pas d'autre irrégularité que celle constituée par le raccordement de la partie de la couche située sur la face principale essentiellement plane et de la partie de la couche située sur le premier flanc du premier pôle, et que la totalité de l'espace compris entre la face principale et le deuxième pôle soit occupé par la couche amagnétique.

L'invention concerne également un procédé de réalisation d'une tête magnétique en couches minces comportant les étapes successives suivantes :
- a) une première étape de dépôt et de découpe sur une face essentiellement plane d'un substrat d'un premier pôle magnétique possédant un flanc formant un angle avec la face du substrat ;
- b) une deuxième étape de dépôt, sur l'ensemble face du substrat et premier pôle magnétique d'une couche d'un matériau amagnétique
- c) une troisième étape de dépôt et de découpe sur la couche de matériau amagnétique d'un deuxième pôle magnétique dont une partie chevauche le flanc du premier pôle
- d) une quatrième étape d'usinage et de polissage de la couche de matériau amagnétique et du deuxième pôle magnétique de façon à réaliser la face active de la tête magnétique parallèlement à la face principale du substrat.

Les différents objets et caractéristiques de l'invention apparaîtront plus clairement dans la description qui va suivre faite en se reportant aux figures annexées qui représentent
- la figure 1, une coupe en perspective d'un exemple de réalisation d'une tête magnétique en couche selon l'invention ;
- la figure 2, une vue en coupe de la tête de la figure 1, avec les circuits d'induction de champ magnétique ;
- la figure 3, une première variante de réalisation d'une tête magnétique selon l'invention ;
- la figure 4, une deuxième variante de réalisation d'une tête magnétique selon l'invention ;
- les figures 5 à 9, différentes étapes de réalisation du procédé selon l'invention ;
- la figure 10, un mode de réalisation collectif de têtes magnétiques selon l'invention.

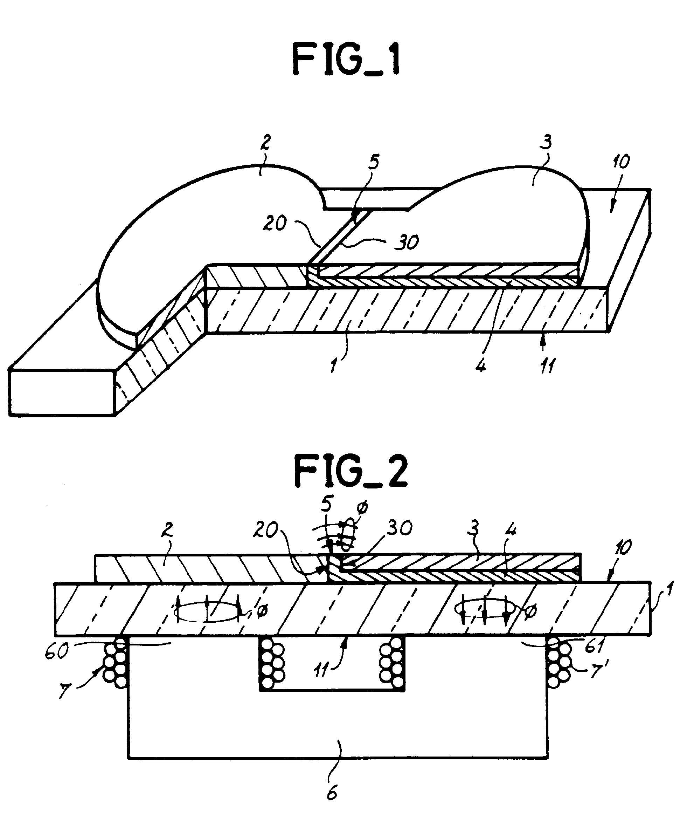

En se reportant à la figure 1, on va d'abord d'écrire un exemple de réalisation d'une tête magnétique selon l'invention .

Cette tête comporte une pièce substrat ou pièce support 1 possédant une face plane 10.

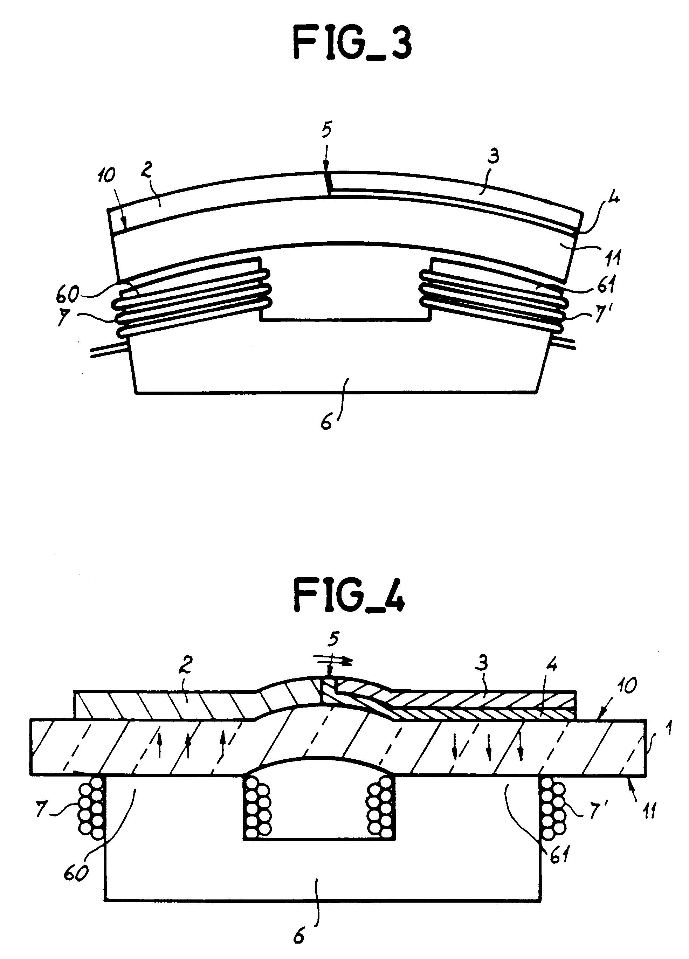

Cette face 10 peut n'être qu'essentiellement plane et avoir, comme cela est représenté en figure 3, un rayon de courbure qui est très grand par rapport à l'épaisseur de l'entrefer. En effet dans le cadre de la technologie en couches minces citée précédemment (Demande de Brevet français n° 86 05238 déjà citée), une épaisseur de quelques dixièmes de micromètres pour la couche d'entrefer est négligeable par rapport au rayon de courbure de la face 10 et conduit à considérer que la face 10 est essentiellement plane autour de l'entrefer.

Cette face plane 10, porte un premier pôle de tête magnétique 2 qui possède un flanc 20 formant un angle avec le plan de la face 10. Selon l'exemple de réalisation représenté sur la figure 1, le flanc 20 est sensiblement perpendiculaire au plan de la face 10. La face 10 porte également une couche 4 d'un matériau amagnétique qui recouvre le flanc 20 du premier pôle 2. La couche 4 porte un deuxième pôle 3 dont un flanc 30 est sensiblement perpendiculaire au plan de la face 10 et parallèle au flanc 20.

Les flancs 20 et 30 définissent entre les pôles 2 et 3 un entrefer 5.

Les faces supérieures des pôles 2 et 3 et de la couche amagnétique 4 sont au même niveau au moins à l'emplacement de l'entrefer 5.

Un support magnétique, non représenté, placé devant cet entrefer 5 permettra de relier magnétiquement les deux pôles et de fermer le circuit magnétique de la tête.

La figure 2, représente en vue de coupe la tête de la figure 1. La pièce support 1 est réalisée en matériau amagnétique tel que du verre et son épaisseur est faible telle qu'un champ magnétique d'enregistrement ou de lecture la traverse sans trop de perte.

De l'autre côté de la face 10 de la pièce support 1, en vis à vis avec les pôles 2 et 3, sont placées respectivement les extrémités 60 et 61 d'un circuit magnétique 6. Sur ce circuit magnétique sont placés des bobines d'induction de champ magnétique 7 et 7′ à proximité des extrémités 60 et 61. Ces bobines induisent un champ magnétique qui circule par les pôles 2 et 3 selon les flèches O indiquée sur la figure 2. On voit sur cette figure qu'un support magnétique, une bande magnétique par exemple, qui serait placé à la surface supérieure des pôles 2 et 3, couplerait magnétiquement les deux pôles au-dessus de l'entrefer. La tête représentée sur la figure 2 constitue donc une tête magnétique d'enregistrement/lecture.

Sur les figures 1 et 2, la face supérieure de la tête est plane. Comme cela est représenté en figure 3, et comme cela a été mentionné précédemment, elle peut être courbe convexe. La pièce support 1 est courbe, notamment sa face 10. Les pôles 2 et 3, et la couche amagnétique 4 sont réalisés sur cette face 10 et ont donc une forme courbe. Il est à noter que les extrémités 60 et 61 du circuit magnétique 6 doivent être courbes pour s'adapter à la forme de la pièce 1.

Une telle tête est plus particulièrement utilisable dans les appareils d'enregistrement/lecture à bandes magnétiques où la bande peut mieux se plaquer contre la tête.

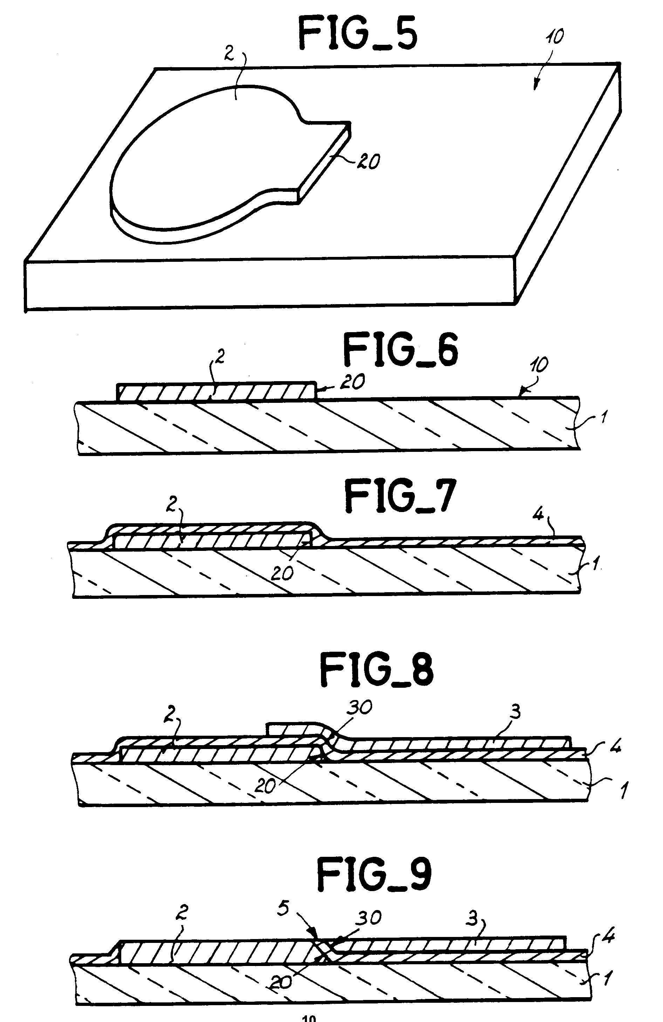

Comme représenté en figure 4, la courbure de la tête peut se limiter à une région entourant l'entrefer 5. Dans ce cas, la pièce support 1 est courbe que dans une faible région et le circuit magnétique 6 peut être conçu pour que ses extrémités 60 et 61, s'adaptent à des parties planes de la pièce 1, ce qui facilite la réalisation du circuit 6.

En se reportant aux figures 5 à 9, on va décrire un exemple d'un procédé de réalisation selon l'invention d'une tête magnétique telle que celle de la figure 1.

Au cours d'une première étape on réalise, sur une face 10 d'un substrat 1, un dépôt d'une couche d'un matériau magnétique puis une découpe dans cette couche, un pôle magnétique 2 possédant au moins un flanc 20 sensiblement perpendiculaire à la face 10 du substrat 1.

On obtient ainsi un composant tel que représenté sur les figures 5 et 6.

Au cours d'une deuxième étape, représentée en figure 7, on réalise un dépôt d'une couche d'un matériau amagnétique 4.

Au cours d'une troisième étape, représentée en figure 8, on réalise un dépôt d'une couche d'un matériau magnétique suivi d'une découpe dans cette couche d'un pôle magnétique 3 ayant un flanc 30 en vis-à-vis avec le flanc 20 du pôle 2.

Au cours d'une quatrième étape on réalise un usinage suivi d'un polissage ayant pour effet d'enlever la couche d'isolant situé sur le pôle magnétique 2 et d'araser les deux pôles 2 et 3 au niveau des deux flancs 20 et 30 qui déterminent l'entrefer de la tête magnétique telle que représentée en figure 1.

Par suite, le raccordement de la partie de la couche 4 de matériau amagnétique située sur la face 10 du substrat 1 avec la partie de cette couche 4 située sur le flanc 20 se fait selon un angle obtus.

Le procédé de l'invention permet la réalisation de plusieurs têtes, ainsi décrites, sur un même substrat. Dans ce cas à l'issue de la quatrième étape on prévoit une cinquième étape de découpe de têtes ainsi réalisées collectivement.

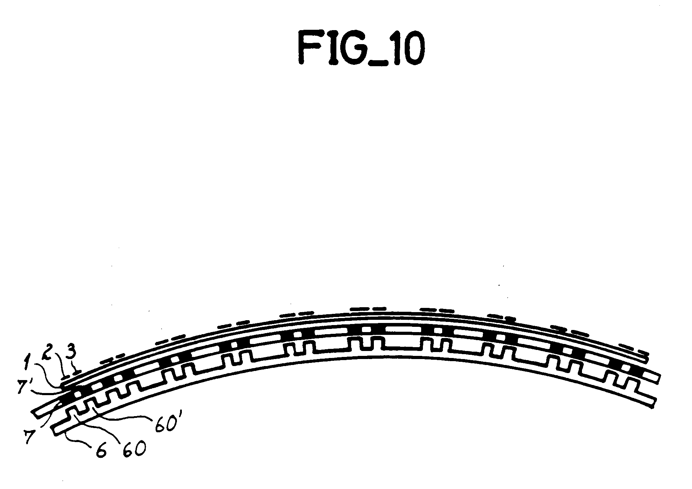

Selon le procédé de l'invention, on peut également réaliser collectivement plusieurs têtes magnétiques avec leur circuit magnétique tel que décrit en se référant à la figure 2. Ce procédé de l'invention est illustré sur la figure 10.

Sur cette figure, on trouve un ensemble de têtes magnétiques 2 et 3 reposant sur une plaque de substrat 1.

Après réalisation de cet ensemble de têtes réalisées comme décrit précédemment au cours des quatre premières étapes du procédé, on réalise des paires de bobinages, telles que 7-7′, moulées dans un matériau amagnétique. Ces bobinages 7-7′ sont réalisés au même pas que les pôles magnétiques 2-3 de façon à pouvoir être mis en correspondance les uns des autres.

On réalise ensuite les circuits magnétiques 6 dans un matériau tel que la ferrite. Ces circuits magnétiques possèdent des paires de plots 60, 60′ au même pas que les bobinages magnétiques de telle façon qu'à chaque paire de bobinages puisse être associée une paire de plots.

La plaque de substrat 1 portant les pôles magnétiques 2,3 est ensuite associée, comme cela est représenté en figure 10, à l'ensemble de bobinages et aux circuits magnétiques en ferrite 6 de telle façon qu'à chaque paire de pôles 2,3 est associée une paire de bobinages 7,7′ et une paire de plots 60,60′ en ferrite.

Enfin, la cinquième étape mentionnée précédemment prévoit d'individualiser chaque tête magnétique par découpe selon des traits mixtes représentés sur la droite de la figure 10.

## Revendications

1. Arrangement de pôles magnétiques pour une tête magnétique d'enregistrement/lecture en couches minces comprenant:
- une pièce de substrat (1) possédant une face principale (10) parallèle à la face active de la tête magnétique,
- un premier pôle de circuit magnétique (2) situé sur cette face principale (10) et présentant un premier flanc (20) formant un angle avec la face principale (10),
- un deuxième pôle de circuit magnétique (3) situé sur la face principale (10) et présentant également un deuxième flanc (30) sensiblement parallèle au premier flanc (20),
- une couche (4) d'un matériau amagnétique située entre le premier flanc (20) et le deuxième flanc (30) et se prolongeant entre le deuxième pôle (3) et la face principale (10),
caractérisé en ce
que la couche amagnétique (4) ne présente pas d'autre irrégularité que celle constituée par le raccordement de la partie de la couche (4) située sur la face principale (10) essentiellement plane et de la partie de la couche (4) située sur le premier flanc (20) du premier pôle (2), et que la totalité de l'espace compris entre la face principale (10) et le deuxième pôle (3) soit occupé par la couche amagnétique (4).

2. Arrangement de pôles magnétiques selon la revendication 1, caractérisé en ce que la face (10) de la pièce de substrat (1) est courbe convexe à l'endroit de l'entrefer (5).

3. Tête magnétique appliquant l'arrangement selon l'une des revendications 1 à 2, caractérisé en ce que la pièce de substrat (1) est en matériau amagnétique et que sur une deuxième face (11) opposée à la face principale (10) de la pièce de substrat sont disposés deux extrémités (60, 61) d'un circuit d'induction de champ magnétique (6) muni d'au moins une bobine d'induction de champ magnétique (7, 7′), chacune de ces extrémités (60, 61) étant située en regard d'un des pôles (2, 3).

4. Procédé de réalisation d'un arrangement de pôles magnétiques pour une tête magnétique en couches minces, suivant l'une des revendications précédentes, caractérisé en ce qu'il comporte les étapes successives suivantes:
- a) une première étape de dépôt et de découpe sur une face (10) essentiellement plane d'un substrat (1) d'un premier pôle magnétique (2) possédant un flanc (20) formant un angle avec la face (10) du substrat (1);
- b) une deuxième étape de dépôt, sur l'ensemble face du substrat (1) et premier pôle magnétique (2), d'une couche d'un matériau amagnétique (4);
- c) une troisième étape de dépôt et de découpe sur la couche de matériau amagnétique (4) d'un deuxième pôle magnétique (3) dont une partie chevauche le flanc (20) du premier pôle;
- d) une quatrième étape d'usinage et de polissage de la couche de matériau amagnétique (4) et du deuxième pôle magnétique (3) de façon à réaliser la face active de la tête magnétique parallèlement à la face principale du substrat (1).

5. Procédé de réalisation selon la revendication 4, caractérisé en ce qu'au cours des quatre premières étages, plusieurs arrangements de pôles magnétiques sont réalisés sur le même substrat et qu'il comporte une cinquième étape de découpe d'au moins un arrangement de pôles magnétiques.

6. Procédé de réalisation d'une tête magnétique selon la revendication 5, caractérisé en ce qu'il comporte entre la quatrième étape et la cinquième étape, une première phase de réalisation de bobines d'induction de champs magnétiques moulées dans un matériau amagnétique, une deuxième phase de réalisation de circuits magnétiques, une troisième phase d'assemblage des bobines d'induction, des circuits magnétiques et des arrangements de pôles magnétiques, la cinquième étape consistant en la découpe de l'assemblage ainsi obtenu.

## Patentansprüche

1. Anordnung von Magnetpolen für einen magnetischen Dünnschicht-Schreib/Lesekopf, wobei die Anordnung enthält:
- ein Substrat (1), das eine parallel zur aktiven Seite des Magnetkopfes liegende Hauptseite (10) besitzt,
- einen ersten Pol des Magnetkreises (2) auf dieser Hauptseite (10), der eine erste, einen Winkel mit der Hauptseite (10) bildende Flanke (20) aufweist,
- einen zweiten Pol des Magnetkreises (3), der auf der Hauptseite (10) sitzt und eine zweite, zur ersten Flanke (20) im wesentlichen parallele Flanke (30) aufweist,
- eine Schicht (4) aus unmagnetischem Material zwischen der ersten Flanke (20) und der zweiten Flanke (30), wobei diese Schicht sich zwischen dem zweiten Pol (3) und der Hauptseite (10) verlängert,
dadurch gekennzeichnet, daß die Schicht (4) aus unmagnetischem Material als einzige Unregelmäßigkeit die durch den Anschluß des Bereichs der Schicht (4), der sich auf der im wesentlichen ebenen Hauptseite befindet, und dem Bereich der Schicht (4), der sich auf der ersten Flanke (20) des ersten Pols (2) befindet, gebildete Unregelmäßigkeit besitzt und daß der gesamte Raum zwischen der Hauptseite (10) und dem zweiten Pol (3) von der unmagnetischen Schicht (4) besetzt ist.

2. Anordnung von Magnetpolen nach Anspruch 1, dadurch gekennzeichnet, daß die Hauptseite (10) des Substrats (1) in Höhe des Magnetspalts (5) konvex gekrümmt ist.

3. Magnetkopf, der die Anordnung nach einem der Ansprüche 1 bis 2 anwendet, dadurch gekennzeichnet, daß das Substrat (1) aus unmagnetischem Material ist, und daß auf einer der Hauptseite (10) des Substrats gegenüberliegenden zweiten Seite (11) zwei Enden (60, 61) eines Magnetfeldinduktionskreises (6) liegen, der mindestens eine Magnetfeldinduktionsspule (7, 7′) trägt, wobei jedes dieser Enden (60, 61) gegenüber einem der Pole (2, 3) liegt.

4. Verfahren zur Herstellung einer Anordnung von Magnetpolen für einen Dünnschicht-Magnetkopf gemäß einem der vorhergehenden Ansprüche, dadurch gekennzeichnet, daß es die nachstehenden Verfahrensschritt in Folge aufweist;
- a) einen ersten Verfahrensschritt, bei dem auf einer im wesentlichen ebenen Oberseite eines Substrats (1) ein erster Magnetpol (2) mit einer einen Winkel mit der Hauptseite (10) des Substrats (1) einschließenden Flanke (20) aufgebracht und ausgeschnitten wird,
- b) einen zweiten Verfahrensschritt, bei dem auf die Oberseite des Substrats (1) und den ersten Magnetpol (2) eine Schicht aus unmagnetischem Material (4) aufgebracht wird,
- c) einen dritten Verfahrensschritt, bei dem auf die Schicht (4) aus unmagnetischem Material ein zweiter Magnetpol (3) aufgebracht und ausgeschnitten wird, der mit einem Bereich die Flanke (20) des ersten Pols überlappt,
- d) einen vierten Verfahrensschritt, in dem die Schicht aus unmagnetischem Material (4) und des zweiten Magnetpols (3) so spanend bearbeitet und poliert wird, daß die aktive Seite des Magnetkopfes parallel zur Hauptseite des Substrats (1) entsteht.

5. Herstellungsverfahren nach Anspruch 4, dadurch gekennzeichnet, daß während der vier ersten Verfahrensschritte mehrere Anordnungen von Magnetpolen auf einem gemeinsamen Substrat hergestellt werden und daß in einem fünften Verfahrensschritt mindestens eine Anordnung von Magnetpolen abgeschnitten wird.

6. Herstellungsverfahren für einen Magnetkopf nach Anspruch 5, dadurch gekennzeichnet, daß zwischen dem vierten Verfahrensschritt und dem fünften Verfahrensschritt eine erste Phase der Herstellung von Magnetfeldinduktionsspulen, die in ein unmagnetisches Material eingegossen werden, eine zweite Phase der Herstellung von Magnetkreisen, eine dritte Phase des Zusammenbaus der Induktionsspulen, der Magnetkreise und der Anordnungen von Magnetpolen eingefügt wird, wobei der fünfte Verfahrensschritt im Zerschneiden des so erhaltenen Aufbaus besteht.

## Claims

1. Arrangement of magnetic poles for a thin-layer magnetic recording/reading head comprising
- a substrate (1) piece possessing a main face (10) parallel to the active face of the magnetic head,
- a first magnetic circuit pole (2) located on this main face (10) and having a first side wall (20) forming an angle with the main face (10),
- a second magnetic circuit pole (3) located on the main face (10) and likewise having a second side wall (30) substantially parallel to the first side wall (10),
- a layer (4) of a nonmagnetic material located between the first side wall (20) and the second side wall (30) and extending between the second pole (3) and the main face (10),
characterized in that the nomagnetic layer (4) does not have an irregularity other than that constituted by the connection of that part of the layer (4) which is located on the main face (10) which is essentially plane and that part of the layer (4) which in located on the first side wall (20) of the first pole (2) and in that the entire space lying between the main face (10) and the second pole (3) is occupied by the nonmagnetic layer (4).

2. Arrangement of magnetic poles according to Claim 1, characterized in that the face (10) of the substrate (1) piece is curved convexly at the location of the air gap (5).

3. Magnetic head applying the arrangement according to one of Claims 1 to 2, characterized in that the substrate (1) piece is made of nonmagnetic material and in that, on a second face (11) opposite the main face (10) of the substrate piece, are arranged two ends (60, 61) of a magnetic field induction circuit (6) equipped with at least one magnetic field induction coil (7, 7′), each of these ends (60, 61) being located facing one of the poles (2, 3).

4. Method of producing an arrangement of magnetic poles for a thin-layer magnetic head, according to one of the preceding claims, characterized in that it includes the following successive steps:
- a) a first step of depositing and cutting out, on an essentially plane face (10) of a substrate (1), a first magnetic pole (2) possessing a side wall (20) forming an angle with the face (10) of the substrate (1);
- b) a second step of depositing, on the substrate (1) face/first magnetic pole (2) assembly, a layer (4) of a nonmagnetic material;
- c) a third step of depositing and cutting out, on the layer (4) of nonmagnetic material, a second magnetic pole (3), part of which overlaps the side wall (20) of the first pole;
- d) a fourth step of machining and polishing the layer (4) of nonmagnetic material and the second magnetic pole (3) so as to produce the active face of the magnetic head parallel to the main face of the substrate (1).

5. Production method according to Claim 4, characterized in that, during the four first stages, several arrangements of magnetic poles are produced on the same substrate. and in that it includes a fifth step of cutting out at least one arrangement of magnetic poles.

6. Method of producing a magnetic head according to Claim 6, characterized in that it includes, between the fourth step and the fifth step, a first phase of producing magnetic field induction coils moulded in a non-magnetic material, a second phase of producing magnetic circuits and a third phase of assembling induction coils, magnetic circuits and magnetic pole arrangements, the fifth step consisting of the cutting-out of the assembly thus obtained.
